(19) **Europäisches Patentamt / European Patent Office / Office européen des brevets**

(11) **EP 2 763 232 A1**

(12) **EUROPEAN PATENT APPLICATION**
published in accordance with Art. 153(4) EPC

(43) Date of publication:
06.08.2014 Bulletin 2014/32

(21) Application number: 12837062.4

(22) Date of filing: 24.09.2012

(51) Int Cl.:
$H01M\ 10/0587^{(2010.01)}$    $H01M\ 2/14^{(2006.01)}$
$H01M\ 4/139^{(2010.01)}$    $H01M\ 4/66^{(2006.01)}$
$H01M\ 10/052^{(2010.01)}$    $H01M\ 10/0566^{(2010.01)}$

(86) International application number:
PCT/JP2012/074376

(87) International publication number:
WO 2013/047426 (04.04.2013 Gazette 2013/14)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 28.09.2011 JP 2011213136

(71) Applicant: **Sumitomo Bakelite Company Limited
Shinagawa-ku
Tokyo 140-0002 (JP)**

(72) Inventors:
• **SASAKI Tatsuro**
**Tokyo 140-0002 (JP)**
• **ICHIKAWA Yuichi**
**Tokyo 140-0002 (JP)**

(74) Representative: **Schollweck, Susanne
ZSP Patentanwälte
Partnerschaftsgesellschaft
Radlkoferstrasse 2
81373 München (DE)**

(54) **METHOD OF PRODUCING LITHIUM ION SECONDARY BATTERY**

(57) Provided is a method of producing a lithium ion secondary battery which is capable of quickly performing winding when winding a positive electrode plate and a negative electrode plate while allowing these electrode plates to overlap with each other, and which is capable of reliably preventing positional deviation between the positive electrode plate and the negative electrode plate. The method of producing a lithium ion secondary battery includes: a first winding process of winding a positive electrode plate (2) in a roll shape to form a first roll (11) and to provide a curling tendency to the positive electrode plate (2), and of winding a negative electrode plate (3) in a roll shape to form a second roll (12) and to provide a curling tendency to the negative electrode plate (3); and a second winding process of unrolling the positive electrode plate (2) from the first roll (11), unrolling the negative electrode plate (3) from the second roll (12), and winding the unrolled positive electrode plate (2) and negative electrode plate (3) in a roll shape to form a third roll (13) while allowing the positive electrode plate (2) and the negative electrode plate (3) to overlap with each other and maintaining the curling tendency.

FIG. 2

EP 2 763 232 A1

**Description**

Technical Field

The present invention relates to a method of producing a lithium ion secondary battery.
Priority is claimed on Japanese Patent Application No. 2011-213136, filed September 28, 2011, the content of which is incorporated herein by reference.

Background Art

As a lithium ion secondary battery in the related art, a lithium ion secondary battery in which a plate-shaped positive electrode and a plate-shaped negative electrode are wound into a spiral shape in an overlapping state is known (for example, refer to PTL 1). A process of producing the lithium ion secondary battery having this configuration includes a winding process of winding the positive electrode and the negative electrode while allowing these electrodes to overlap with each other.
However, for example, in a case where the positive electrode or the negative electrode is stored in a folded state before performing the winding process, the following problems occur. For example, in the winding process, when winding the positive electrode and the negative electrode and allowing these electrodes to overlap with each other, a positional relationship between the positive electrode and the negative electrode deviates or winding in a suitable spiral shape (at a degree at which the lithium ion secondary battery is capable of withstanding a use environment) is not performed due to a fold line generated by the folding, and excessive time is consumed in the winding process.

Citation List

Patent Literature

[PTL 1] Japanese Unexamined Patent Application, First Publication No. 2011-129528

Summary of Invention

Technical Problem

An object of the invention is to provide a method of producing a lithium ion secondary battery which is capable of quickly performing winding when winding a positive electrode plate and a negative electrode plate while allowing these electrode plates to overlap with each other, and which is capable of reliably preventing positional deviation between the positive electrode plate and the negative electrode plate.

Solution to Problem

The object is accomplished by the invention of the following (1) to (12).

(1) According to an aspect of the invention, there is provided a method of producing a lithium ion secondary battery including a positive electrode plate provided with a positive electrode current collector which is constituted by a plate-shaped body having flexibility and which has conductivity and a positive electrode active material which is formed on at least one surface of the positive electrode current collector in a layer shape, and a negative electrode plate provided with a negative electrode current collector which is constituted by a plate-shaped body having flexibility and which has conductivity and a negative electrode active material which is formed on at least one surface of the negative electrode current collector in a layer shape, the positive electrode plate and the negative electrode plate overlapping to face each other. The method includes: a first winding process of winding the positive electrode plate in a roll shape to form a first roll and to provide a curling tendency to the positive electrode plate, and of winding the negative electrode plate separately from the positive electrode plate in a roll shape in the same direction as a winding direction of the first roll to form a second roll and to provide a curling tendency to the negative electrode plate; and a second winding process of unrolling the positive electrode plate from the first roll, unrolling the negative electrode plate from the second roll, and winding the unrolled positive electrode plate and negative electrode plate in a roll shape to form a third roll while allowing the positive electrode plate and the negative electrode plate to overlap with each other and maintaining the curling tendency.
(2) In the method of producing a lithium ion secondary battery according to (1), respective winding speeds with respect to the positive electrode plate and the negative electrode plate in the first winding process, and a winding speed in the second winding process may be equal to each other.

(3) In the method of producing a lithium ion secondary battery according to (1), the respective winding speeds with respect to the positive electrode plate and the negative electrode plate in the first winding process, and the winding speed in the second winding process may be different from each other.

(4) In the method of producing a lithium ion secondary battery according to (3), the winding speed in the second winding process may be faster than the respective winding speeds in the first winding process.

(5) In the method of producing a lithium ion secondary battery according to any one of (1) to (4), the second winding process may be performed in an inert atmosphere.

(6) In the method of producing a lithium ion secondary battery according to any one of (1) to (5), in the second winding process, the winding may be performed in such a manner that the positive electrode plate is located on the outermost side of the third roll.

(7) In the method of producing a lithium ion secondary battery according to any one of (1) to (6), the lithium ion secondary battery may include a plate-shaped separator having flexibility which is interposed between the positive electrode plate and the negative electrode plate, and a fourth roll, which is obtained by winding the separator in a roll shape in the same direction as the winding direction and to which a curling tendency is provided, may be prepared, and in the second winding process, when winding the unrolled positive electrode plate and negative electrode plate in a roll shape while allowing these electrode plates to overlap with each other to obtain the third roll, the winding may be performed while unrolling the separator from the fourth roll and interposing the unrolled separator and maintaining the curling tendency between the positive electrode plate and the negative electrode plate that are in the course of winding.

(8) In the method of producing a lithium ion secondary battery according to any one of (1) to (7), in the lithium ion secondary battery, the positive electrode active material may be respectively provided on both surfaces of the positive electrode current collector, and the negative electrode active material may be respectively provided on both surfaces of the negative electrode current collector, and the method may further include an active material supply process of respectively supplying the positive electrode active material to both surfaces of the positive electrode current collector, and of respectively supplying the negative electrode active material to both surfaces of the negative electrode current collector, prior to the first winding process.

(9) In the method of producing a lithium ion secondary battery according to any one of (1) to (8), in the lithium ion secondary battery, the third roll may be accommodated in a container filled with an electrolytic solution, and the method may further include an accommodation process of accommodating the third roll in the container not yet filled with the electrolytic solution after the second winding process, a filling process of filling the electrolytic solution in the container in which the third roll is accommodated, and a sealing process of liquid-tightly sealing the container.

(10) In the method of producing a lithium ion secondary battery according to any one of (1) to (9), the positive electrode active material may contain lithium.

(11) In the method of producing a lithium ion secondary battery according to any one of (1) to (10), the negative electrode active material may contain carbon.

(12) In the method of producing a lithium ion secondary battery according to any one of (1) to (11), the positive electrode current collector and the negative electrode current collector may be constituted by metal materials different from each other.

Advantageous Effects of Invention

According to the invention, when winding the positive electrode plate and the negative electrode plate and allowing these electrode plates to overlap with each other, since the curling tendency is provided prior to the winding, that is, in advance, to each of the positive electrode plate and the negative electrode plate in the same direction, for example, the winding process can be performed quickly and easily in comparison to a case where the curling tendency is not provided or a case where a fold line is formed.

In addition, since the curling tendency is provided in the same direction in each case, the positive electrode plate and the negative electrode plate tend to come into close contact with each other during winding, and thus it is possible to reliably prevent positional deviation between the positive electrode plate and the negative electrode plate.

Brief Description of Drawings

FIG 1A is a cross-sectional side view sequentially illustrating respective processes in a method of producing a lithium ion secondary battery of the invention.

FIG. 1B is a cross-sectional side view sequentially illustrating respective processes in the method of producing the lithium ion secondary battery of the invention.

FIG. 2 is a cross-sectional side view sequentially illustrating respective processes in the method of producing the lithium ion secondary battery of the invention.

FIG. 3 is a cross-sectional side view sequentially illustrating respective processes in the method of producing the lithium ion secondary battery of the invention.

FIG. 4 is a cross-sectional side view sequentially illustrating respective processes in the method of producing the lithium ion secondary battery of the invention.

FIG. 5 is a perspective view sequentially illustrating respective processes in the method of producing the lithium ion secondary battery of the invention.

FIG 6 is a perspective view sequentially illustrating respective processes in the method of producing the lithium ion secondary battery of the invention.

FIG. 7 is a view illustrating a relation between the number of counts of annihilation γ-rays and the positron annihilation time.

Description of Embodiments

Hereinafter, a method of producing a lithium ion secondary battery of the invention will be described in detail with reference to preferred embodiments illustrated in the attached drawings.

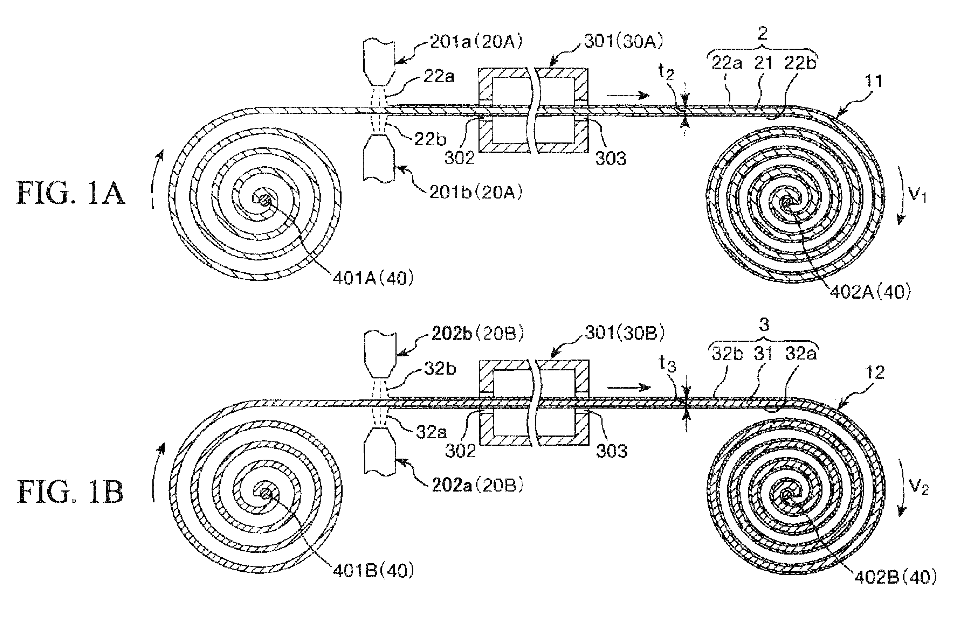

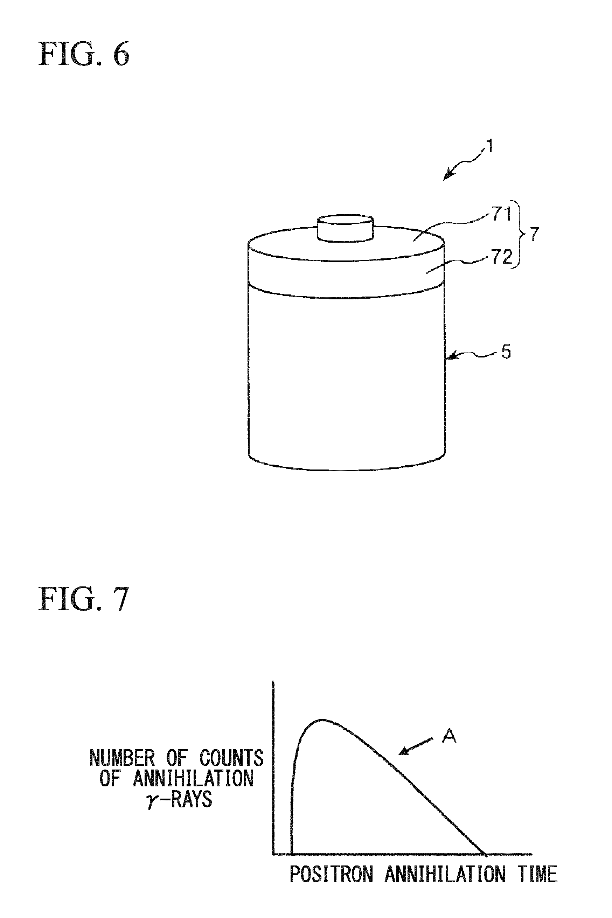

FIG 1A to FIG. 6 are views sequentially illustrating respective processes in the method of producing the lithium ion secondary battery of the invention, and FIG. 7 is a view illustrating a relation between the number of counts of annihilation γ-rays and a positron annihilation time. In addition, in the following description, an upper side in FIG. 1A, FIG. 1B, FIG. 2, FIG. 5, and FIG 6 is referred to as "above" or "upper", and a lower side in these drawings is referred to as "below" or "lower" for convenience of explanation. In addition, in FIG 1A to FIG. 4, a positive electrode plate, a negative electrode plate, and a separator are exaggeratedly drawn in the thickness direction thereof.

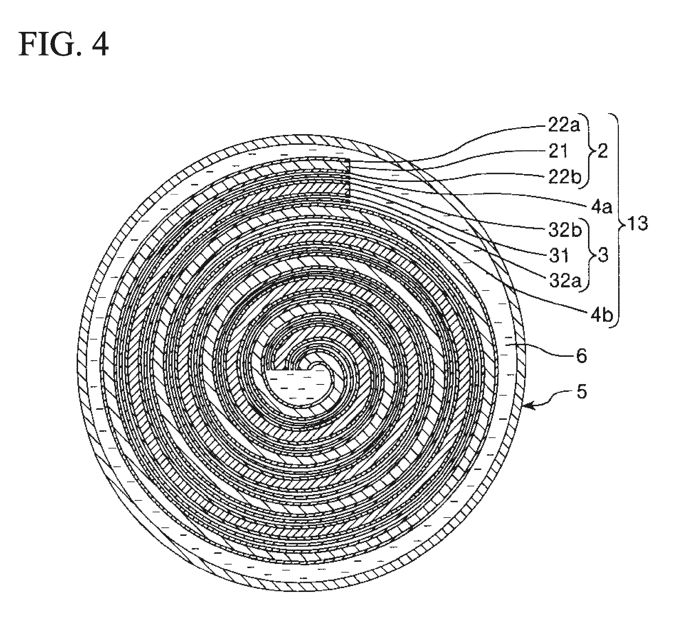

A lithium ion secondary battery (hereinafter, simply referred to as "secondary battery) 1 shown in FIG. 6 is produced by a method of producing a lithium ion secondary battery of the invention. The secondary battery 1 includes a positive electrode plate 2, a negative electrode plate 3, separators 4a and 4b, a container 5 that collectively accommodates the above-described members, an electrolytic solution 6 that is filled in the container 5, and a lid (cap) 7 that liquid-tightly seals the container 5 (refer to FIG. 4 to FIG 6). Hereinafter, the configuration of each portion will be described.

The positive electrode plate 2 includes a positive electrode current collector 21 that is constituted by a plate-shaped body (strip-shaped body) having flexibility, a positive electrode active material (positive electrode material) 22a that is formed in a layer shape on one surface of the positive electrode current collector 21, and a positive electrode active material (positive electrode material) 22b that is formed in a layer shape on the other surface of the positive electrode current collector 21.

The positive electrode current collector 21 is constituted by a material having conductivity, and as a material thereof aluminum may be used without particular limitation.

The positive electrode active materials 22a and 22b contain lithium, and as a material thereof, a lithium ion metal oxide (composite oxide) such as lithium cobalt oxide ($LiCoO_2$), lithium nickel oxide ($LiNiO_2$), and lithium manganese oxide ($LiMn_2O_4$) may be used without particular limitation. According to this, lithium ions, which are in charge of electric conduction, are reliably obtained when using the secondary battery 1. In addition to this, as a constituent material of the positive electrode active materials 22a and 22b, for example, a conductive polymer such as polyaniline and polypyrrole, and the like may be used.

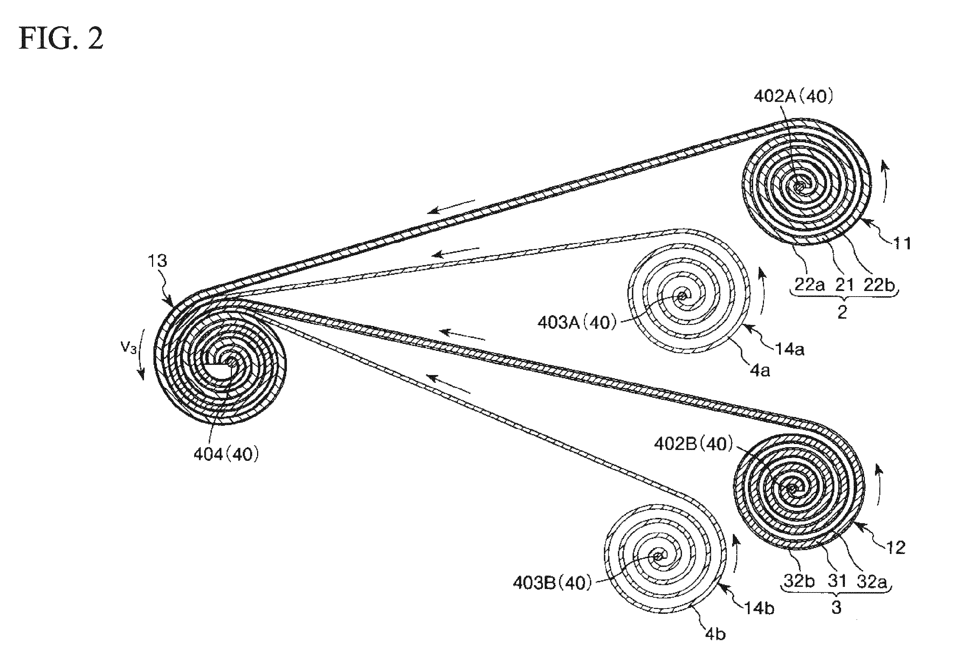

As shown in FIG. 1A, FIG 1B, and FIG 2, the positive electrode plate 2 is wound in a roll shape to form a first roll 11 before being accommodated in the container 5, that is, during production of the secondary battery 1. Similarly, the negative electrode plate 3 is also wound in a roll shape to form a second roll 12 before being accommodated in the container 5, that is, during production of the secondary battery 1.

The negative electrode plate 3 includes a negative electrode current collector 31 that is constituted by a plate-shaped body (strip-shaped body) having flexibility, a negative electrode active material (negative electrode material) 32a that is formed in a layer shape on one surface of the negative electrode current collector 31, and a negative electrode active material (negative electrode material) 32b that is formed in a layer shape on the other surface of the negative electrode current collector 31.

The negative electrode current collector 31 is constituted by a material having conductivity, and a material thereof is preferably constituted by a metal material different from that of the positive electrode current collector 21. For example, in a case where the positive electrode current collector 21 is constituted by aluminum, the negative electrode current collector 31 may be constituted by copper and nickel. In this manner, since the positive electrode current collector 21 and the negative electrode current collector 31 are constituted by metal materials different from each other, materials that are appropriate for "positive electrode" and "negative electrode" of the secondary battery 1 may be used in the positive electrode current collector 21 and the negative electrode current collector 31, respectively.

The negative electrode active materials 32a and 32b contain carbon, and it is particularly preferable that the negative electrode active materials 32a and 32b be constituted by a carbonaceous material for lithium ion secondary batteries (hereinafter, simply referred to as "carbonaceous material"), which will be described later.

The carbonaceous material for lithium ion secondary batteries contains graphite and hard carbon as main materials.

Graphite is used as the carbonaceous material in the related art in consideration of high charging and discharging efficiency (discharging capacity/charging capacity). However, graphite has a disadvantage in that when repeating cycles, a decrease in charging and discharging capacity rapidly occurs, and input and output characteristics of a large current is low.

As a carbonaceous material to solve the problem related to the charging and discharging characteristics, hard carbon (non-graphitizable carbon), which can be obtained by baking a polymer in which a graphite crystal structure is less likely to be developed, has been developed. However, in a case of using the hard carbon as a negative electrode material, stability during cycles increases and thus input and output characteristics of a large current may be improved, but there is a problem in that the charging and discharging efficiency (charging efficiency and discharging efficiency) cannot be sufficiently obtained.

In contrast, with regard to the carbonaceous material, when using a material, which is obtained by adding the hard carbon to graphite as a main material, as the negative electrode active materials 32a and 32b, the stability during cycles may be increased while maintaining substantially the same charging and discharging efficiency as that of a graphite elementary substance, and thus the input and output characteristics of a large current can be improved. Further, the charging and discharging efficiency may be excellent in comparison to the hard carbon elementary substance. As a result, it is possible to obtain the secondary battery 1 excellent in charging capacity, discharging capacity, and balance in charging and discharging efficiency.

Graphite is one of allotropes of carbon, and is a material of hexagonal, hexagonal-plate-like crystal which forms a layer-like lattice constituted by a layer in which 6 carbocyclic rings are connected to each other.

When using graphite as a carbonaceous material for lithium ion secondary batteries, charging and discharging efficiency is excellent, but there is a problem in that when repeating cycles, a decrease in charging and discharging capacity rapidly occurs, and input and output characteristics of a large current is low.

In contrast, when adding the following hard carbon to graphite, stability is raised and the charging and discharging efficiency is increased during cycles, and thus input and output characteristics of a large current may be improved.

It is preferable that the graphite content in the carbonaceous material for lithium ion secondary batteries be 55% by weight to 95% by weight, and more preferably 60% by weight to 85% by weight. When the graphite content is in the above-described range, stability is raised and the charging and discharging efficiency is increased during cycles, and thus input and output characteristics of a large current may be improved. In contrast, when the graphite content is less than the lower limit, sufficient charging and discharging efficiency cannot be obtained. On the other hand, when the graphite content exceeds the upper limit, the effect of improving stability during cycles and input and output characteristics of a large current are not sufficient.

In contrast, the hard carbon (non-graphitizable carbon) is a carbonaceous material which can be obtained by baking a polymer in which a graphite crystal structure is less likely to be developed, and is an amorphous material. In other words, the hard carbon is a carbonaceous material that can be obtained by subjecting a resin or a resin composition to a carbonization treatment.

The hard carbon is high in stability during cycles, and can easily perform input and output of a large current. However, in a case where a carbonaceous material constituted by the hard carbon is used as a negative electrode, there is a problem in that sufficient charging and discharging efficiency cannot be obtained.

In contrast, in the carbonaceous material for lithium ion secondary batteries, since the hard carbon having the above-described characteristics is added to graphite as a main material, it is possible to realize excellent stability during cycles and excellent input and output characteristics of a large current while realizing excellent charging and discharging efficiency.

It is preferable that the hard carbon content be 5% by weight to 45% by weight, and more preferably 15% by weight to 40% by weight. According to this, it is possible to more effectively increase stability during cycles and thus improve input and output characteristics of a large current without deteriorating the excellent charging and discharging efficiency.

Particularly, when the graphite content is set to A [% by weight] and the hard carbon content is set to B [% by weight], it is preferable to satisfy a relationship of $1.2 \leq A/B \leq 19$, and more preferably to satisfy a relationship of $1.5 \leq A/B \leq 5$. When this relationship is satisfied, it is possible to more effectively increase stability during cycles and input and output characteristics of a large current without deteriorating the excellent charging and discharging efficiency.

A resin contained in a resin or resin composition which is a raw material of the hard carbon is not particularly limited and examples thereof include a thermosetting resin, a thermoplastic resin, petroleum- or coal-based tar or pitch such as petroleum-based tar or pitch that is produced as a byproduct during production of ethylene, coal tar that is generated during coal carbonization, a heavy component or pitch obtained by removing a low-boiling point component from coal tar by distillation, tar or pitch that can be obtained by liquefying coal, a material obtained by subjecting tar, pitch, and the like to a cross-linking treatment, and the like. These materials may be used alone or in a combination of two or more kinds thereof.

In addition, as described below, the resin composition may contain a curing agent, an additive, and the like in addition to the resin as a main component. In addition, a cross-linking treatment by oxidization may be appropriately performed.

The thermosetting resin is not particularly limited, and examples thereof include a phenol resin such as a novolac type phenol resin and a resol type phenol resin, an epoxy resin such as a bisphenol type epoxy resin and a novolac type epoxy resin, a melamine resin, a urea resin, an aniline resin, a cyanate resin, a furan resin, a ketone resin, an unsaturated polyester resin, a urethane resin, and the like. In addition, modified products, which are obtained by modifying these resins into various components, may be used.

In addition, the thermoplastic resin is not particularly limited, and examples thereof include polyethylene, polystyrene, polyacrylonitrile, an acrylonitrile-styrene (AS) resin, an acrylonitrile-butadiene-styrene (ABS) resin, polypropylene, polyvinyl chloride, a methacrylic resin, polyethylene terephthalate, polyamide, polycarbonate, polyacetal, polyphenylene ether, polybutylene terephthalate, polyphenylene sulfide, polysulfone, polyether sulfone, polyether ether ketone, polyether imide, polyamide imide, polyimide, polyphthalamide, and the like.

Particularly, as a resin that is a main component used in the hard carbon, thermosetting resins are preferable. According to this, it is possible to further increase the actual carbon ratio of the hard carbon.

Particularly, among the thermosetting resins, a resin, which is selected from a novolac type phenol resin, a resol type phenol resin, a melamine resin, a furan resin, an aniline resin, and modified products thereof, is preferable. According to this, a degree of freedom for design of the carbonaceous material becomes broad, and thus it is possible to produce the carbonaceous material at a low cost. In addition, it is possible further increase the charging capacity and discharging capacity of the carbonaceous material that is obtained.

In addition, in a case of using the thermosetting resin, a curing agent thereof may be used in combination.

The curing agent that is used is not particularly limited. For example, in a case of using a novolac type phenol resin, hexamethylene tetramine, a resol type phenol resin, polyacetal, paraformaldehyde, and the like may be used. In addition, in a case of the epoxy resin, curing agents such as polyamine compounds including aliphatic polyamine and aromatic polyamine, acid anhydrides, an imidazole compound, dicyandiamide, a novolac type phenol resin, a bisphenol type phenol resin, a resol type phenol resin, and the like, which are known as curing agents in an epoxy resin, may be used.

In addition, even with regard to a thermosetting resin that uses a predetermined amount of the curing agent in combination, in a case of the resin composition that is used in this embodiment, the curing agent is used in an amount less than an amount in a typical case, or the resin composition may be used without using the curing agent in combination.

In addition, in the resin composition as the raw material of the hard carbon, additives may be mixed in in addition to the above-described components.

The additives that are used are not particularly limited, and examples thereof include carbonaceous material precursors that are subjected to a carbonization treatment at 200°C to 800°C, organic acids, inorganic acids, nitrogen-containing compounds, oxygen-containing compounds, aromatic compounds, and non-metal elements, and the like. These additives may be used alone or in a combination of two or more kinds depending on the kind of a resin that is used or properties thereof.

The resin that is used as the raw material of the hard carbon may contain the following nitrogen-containing resins as a main component resin. In addition, in a case where the nitrogen-containing resins are not included in the main component resin, at least one or more kinds of nitrogen-containing compounds may be contained as components other than the main component resin. In addition, the nitrogen-containing resins may be contained as the main component, and the nitrogen-containing compounds may be contained in combination as the components other than the main component resin. The nitrogen-containing hard carbon may be obtained by subjecting these resins to a carbonization treatment. When nitrogen is contained in the hard carbon, suitable electric characteristics may be provided to the hard carbon (carbonaceous material for lithium ion secondary batteries) due to the electronegativity of nitrogen. According to this, intercalation and deintercalation of lithium ions are promoted, and thus excellent charging and discharging characteristics may be provided.

Here, as the nitrogen-containing resins, the following resins are exemplary examples.

As thermosetting resins, a phenol resin, an epoxy resin, and the like, which are modified with nitrogen-containing components such as amine, are exemplary examples in addition to a melamine resin, a urea resin, an aniline resin, a cyanate resin, and a urethane resin.

As thermoplastic resins, polyacrylonitrile, an acrylonitrile-styrene (AS) resin, an acrylonitrile-butadiene-styrene (ABS) resin, polyamide, polyether imide, polyamide imide, polyimide, polyphthalamide, and the like are exemplary examples.

In addition, as resins other than the nitrogen-containing resins, the following resins are exemplary examples.

As thermosetting resins, a phenol resin, an epoxy resin, a furan resin, an unsaturated polyester resin, and the like are exemplary examples.

As thermoplastic resins, polyethylene, polystyrene, polypropylene, polyvinyl chloride, a methacrylic resin, polyethylene terephthalate, polycarbonate, polyacetal, polyphenylene ether, polybutylene terephthalate, polyphenylene sulfide, polysulfone, polyether sulfone, polyether ether ketone, and the like are exemplary examples.

In addition, in a case of using the nitrogen-containing compounds as components other than the main component resin, the kind of the nitrogen-containing compounds is not particularly limited. However, in addition to curing agent components such as hexamethylene tetramine, which is a curing agent of a novolac type phenol resin; and aliphatic polyamine, aromatic polyamine, and dicyandiamide, which are curing agents of an epoxy resin, nitrogen-containing compounds such as an amine compound, an ammonium salt, a nitrate, a nitro compound, and the like, which do not function as curing agents, may be used.

Even in a case where the nitrogen-containing resins are contained or not contained in the main component resin, the nitrogen-containing compounds may be used alone or in a combination of two or more kinds thereof.

The nitrogen content in the resin composition or the resins which are used as the raw material of the hard carbon is not particularly limited. However, it is preferable that the nitrogen content be 5% by weight to 65% by weight, and more preferably 10% by weight to 20% by weight. The nitrogen content may be measured according to a thermal conductivity method. The thermal conductivity method is a method of converting a measurement sample into a simple gas ($CO_2$, $H_2O$, and $N_2$) using a combustion method, homogenizing the gasified sample, and allowing the gasified sample to pass through a column. According to this, these gases are separated from each other step by step, and the carbon content, the hydrogen content, and the nitrogen content can be measured from respective thermal conductivities (in addition, in the invention, the measurement was performed using an element analysis and measurement device (PE2400, manufactured by PerkinElmer, Inc.)).

The carbon atom content in the hard carbon, which can be obtained by performing a carbonization treatment of the resin composition or the resins, is preferably 95% by weight or more, and the nitrogen atom content is preferably 0.5% by weight to 5% by weight.

As described above, when nitrogen atoms are contained in an amount of 0.5% by weight or more, and particularly, 1.0% by weight or more, suitable electric characteristics may be provided to the hard carbon due to the electronegativity of nitrogen. According to this, intercalation and deintercalation of lithium ions are promoted, and thus excellent charging and discharging characteristic may be provided.

In addition, when the nitrogen atoms are set to 5% by weight or less, and particularly, to 3% by weight or less, the electric characteristics provided to the hard carbon is suppressed from being excessively strong, and thus intercalated lithium ions are prevented from causing electrical adsorption with nitrogen atoms. According to this, an increase in irreversible capacity is suppressed, and thus excellent charging and discharging characteristics may be obtained.

The nitrogen content in the hard carbon can be adjusted by appropriately setting carbonization conditions of the resin composition or the resin in addition to the nitrogen content in the resin composition or the resin. In addition, in a case of performing a curing treatment or pre-carbonization treatment before the carbonization treatment, the nitrogen content in the hard carbon also can be adjusted by appropriately setting conditions of these treatments.

For example, examples of a method of obtaining a carbonaceous material that contains nitrogen in the above-described nitrogen content include a method in which the nitrogen content in the resin composition or the resin is set to a predetermined value, and conditions during carbonization treatment thereof, particularly, the final temperature, is adjusted.

A method of preparing the resin composition that is used as the raw material of the hard carbon is not particularly limited. For example, the resin composition may be prepared by a method of mixing the main component resin and other components in a predetermined ratio and melting and mixing the resultant mixture, a method of dissolving and mixing the components in a solvent, a method of pulverizing and mixing the components, and the like.

In addition, with regard to the hard carbon, it is preferable that a positron lifetime measured by a positron annihilation method be 370 picoseconds to 480 picoseconds, and more preferably 380 picoseconds to 460 picoseconds. In a case where the positron lifetime measured by the positron annihilation method is 370 picoseconds to 480 picoseconds, as described below, it can be said that a void with a size at which exit and entrance of lithium easily occurs is formed in the hard carbon. In this case, it is possible to further increase charging capacity and discharging capacity of the carbonaceous material for lithium ion secondary batteries.

In addition, the measurement of the positron lifetime according to the positron annihilation method is performed under the following conditions.

(A) Positron source: Positrons are generated from electron-positron pairs by using an electron accelerator
(B) Gamma-ray detector: $BaF_2$ scintillator and photomultiplier tube
(C) Measurement temperature and atmosphere: 25°C, in vacuum
(D) Number of counts of annihilation $\gamma$-rays: $3 \times 10^6$ or more

(E) Positron beam energy: 10 keV

In addition, a full width at half maximum of a peak, which is measured by X-ray photoelectron spectroscopy (XPS method) and is recognized in the vicinity of 285 eV, is 0.8 eV to 1.8 eV.

Here, a relationship between the positron lifetime and the void size will be described.

A positron lifetime method is a method of measuring the void size by measuring an amount of time passing before a positron ($e^+$) is annihilated after the positron is incident to a sample.

The positron is antimatter of an electron, and has the same rest mass as the electron. However, a charge of the positron is positive.

It is known that when being incident to a substance, the positron forms a pair with an electron (positron-electron pair (positronium)) and is annihilated. When the positron is allowed to enter a carbonaceous material, the positron ($e^+$) is coupled to one of electrons driven out from a polymer to form positronium. The positronium is trapped in a portion of a polymeric material in which an electron density is low, that is, in a local void inside the polymer, overlaps with an electron cloud emitted from a void wall, and is annihilated. In a case where the positronium is present in the void inside the polymer, the void size and the annihilation lifetime of the positronium are inversely proportional to each other. That is, if the void is small, the overlap between the positronium and an ambient electron becomes large, and thus the annihilation lifetime of the positron becomes short. On the other hand, if the void is large, the positronium is less likely to overlap with another electron emitted from the void wall and is less likely to be annihilated, and thus the annihilation lifetime of the positronium becomes long. Accordingly, it is possible to evaluate the size of the void inside the carbonaceous material by measuring the annihilation lifetime of the positronium.

As described above, the positron which is incident to the carbonaceous material forms a positronium in combination with an electron after losing energy, and is annihilated. At this time, γ-rays are emitted from the carbonaceous material.

Accordingly, the γ-rays that are emitted serve as a measurement termination signal.

In the measurement of the annihilation lifetime of the positron, an electron accelerator as a positron source or a general-purpose radioactive isotope $^{22}$Na is frequently used. In a case where β$^+$ collapse into $^{22}$Ne occurs, $^{22}$Na emits a positron and a γ-ray of 1.28 MeV simultaneously. The positron that is incident to the carbonaceous material emits γ-rays of 511 keV through an annihilation process. Accordingly, if the γ-rays of 1.28 MeV are set as an initiation signal, and the γ-rays of 511 keV are set as a termination signal, it is possible to obtain the annihilation lifetime of the positron by measuring a time difference between the signals. Specifically, it is possible to obtain a positron lifetime spectrum as shown in FIG 7. An inclination A of the positron lifetime spectrum indicates the positron lifetime, and thus it is possible to grasp the positron lifetime of the carbonaceous material from the positron lifetime spectrum.

In addition, in a case of using the electron accelerator as the position source, generation of an electron-positron pair is caused to occur by using bremsstrahlung X-ray that is generated by irradiating a target formed from tantalum or tungsten with electron beams, thereby generating a positron. In the case of the electron accelerator, measurement is performed in such a manner that a point of time at which the positron beam is incident to a sample is set as a measurement initiation point (corresponding to the initiation signal in $^{22}$Na), and a termination signal is set in the same principle as in the case of $^{22}$Na.

Is a case where the positron lifetime measured by the position annihilation method is less than 370 picoseconds, the void size is too small, and thus intercalation and deintercalation of lithium ions are less likely to occur. In addition, when the positron lifetime measured by the positron annihilation method exceeds 480 picoseconds, an intercalation amount of lithium increases, but electrostatic capacity increases due to intrusion of other substances such an an electrolytic solution, and thus it is assumed that lithium is less likely to be emitted.

In addition, with regard to the hard carbon, the full width at half maximum of a peak, which is measured by the XPS method and is recognized in the vicinity of 285 eV, is preferably 0.8 eV to 1.8 eV, and is more preferably 0.9 eV to 1.6 eV. In a case where the full width at half maximum of a peak, which is measured by the XPS method and is recognized in the vicinity of 285 eV, is 1.8 eV or less, the majority of elements that are present on the surface of the hard carbon have an inactive C-C bond and the like, and thus it enters a state in which a functional group or an impurity that reacts with an active material relating to ion conduction of lithium ions and the like is substantially not present. In addition, in a case where the full width at half maximum of a peak, which is measured by the XPS method and is recognized in the vicinity of 285 eV, is 0.8 eV or more, there is no problem such as excessive crystallization. Accordingly, as is the case with the carbonaceous material, when the full width at half maximum of a peak, which is measured by the XPS method and is recognized in the vicinity of 285 eV, is 0.8 eV to 1.8 eV, a decrease in charging and discharging efficiency due to irreversible capacity is suppressed.

Next, a relationship between the XPS measurement and a surface state will be described.

The XPS measurement method is a method of irradiating a surface of a solid sample with X-rays and measuring a kinetic energy of a photoelectron discharged from an atom excited according to the irradiation to obtain a bonding energy (having an intrinsic value depending on an atom) of electrons in an atom, thereby performing identification of constituent elements that are present on the surface.

The surface state may also be analyzed by an FT-IR method. However, this method performs identification of a chemical bond that is present at a position distant from the surface by approximately 1 μm. In contrast, in the XPS measurement method, it is possible to perform identification of elements that are present at a position distant from the surface by several Å. According to this, when performing identification of a functional group that is relatively close to the surface, it is preferable to use the XPS measurement method.

With regard to the hard carbon, an average interplanar spacing $d_{002}$ of a (002) plane, which is calculated from a wide angle X-ray diffraction method by using the Bragg equation, is preferably 3.4 Å to 3.9 Å. In a case where the average interplanar spacing $d_{002}$ is 3.4 Å or more, particularly, 3.6 Å or more, interlayer contraction and expansion, which accompany intercalation of lithium ions, are less likely to occur, and thus a decrease in charging and discharging cycle characteristics can be suppressed.

In contrast, in a case where the average interplanar spacing $d_{002}$ is 3.9 Å or less, particularly, 3.8 Å or less, intercalation and deintercalation of lithium ions are smoothly performed, and thus a decrease in charging and discharging efficiency can be suppressed.

Further, with regard to the hard carbon, the size Lc of a crystallite in a c-axis direction (direction that is perpendicular to a (002) plane) is preferably 8 Å to 50 Å.

When Lc is set to 8 Å or more, particularly, 9 Å or more, a space between carbon layers, at which intercalation and deintercalation of lithium ions are possible, is formed, and thus there is an effect of obtaining sufficient charging and discharging capacity. When Lc is set to 50 Å or less, particularly, 15 Å or less, collapse of a carbon lamination structure due to intercalation and deintercalation of lithium ions, or reductive decomposition of an electrolytic solution is suppressed, and thus there is an effect capable of suppressing a decrease in the charging and discharging efficiency and the charging and discharging cycle characteristics.

Lc is calculated as follows.

Lc is determined from a full width at half maximum of a 002-plane peak in a spectrum which is obtained from X-ray diffraction measurement, and a diffraction angle by using the following Scherrer equation.

$$Lc = 0.94\lambda/(\beta\cos\theta) \quad \text{(Scherrer equation)}$$

Lc: Size of a crystallite

$\lambda$: Wavelength of characteristic X-ray Kα1 output from a negative electrode

$\beta$: Full width at half maximum (radian) of a peak

$\theta$: Reflection angle of a spectrum

An X-ray diffraction spectrum in the hard carbon is measured by an X-ray diffraction device "XRD-7000" manufactured by SHIMADZU CORPORATION. A method of measuring the average interplanar spacing in the hard carbon is as follows.

The average interplanar spacing d is calculated from a spectrum obtained by the X-ray diffraction measurement with respect to the hard carbon by using the following Bragg equation.

$$\lambda = 2d_{hkl}\sin\theta \text{ (Bragg equation } (d_{hkl} = d_{002}))$$

$\lambda$: Wavelength of characteristic X-ray Kα1 output from a negative electrode

$\theta$: Reflection angle of a spectrum

Further, with regard to the hard carbon, a specific surface area according to a BET 3-point method in nitrogen adsorption is preferably 1 m²/g to 15 m²/g.

When the specific surface area according to the BET 3-point method in nitrogen adsorption is 15 m²/g or less, a reaction between the carbonaceous material and the electrolytic solution can be suppressed.

In addition, when the specific surface area according to the BET 3-point method in nitrogen adsorption is set to 1 m²/g or more, there is an effect capable of obtaining appropriate permeability of the electrolytic solution into the carbonaceous material.

A method of calculating the specific surface area is as follows.

An amount of monomolecular adsorption Wm is calculated from the following Expression (1), a total surface area Stotal is calculated from the following Expression (2), and the specific surface area S is obtained from the following Expression (3).

$$1/[W(Po/P-1) = (C-1)/WmC(P/Po)/WmC \cdots (1)$$

In Expression (1), P: a gas pressure of an adsorbate that enters an adsorption equilibrium state, Po: a saturated vapor pressure of the adsorbate at an adsorption temperature, W: an adsorbed amount at an adsorption equilibrium pressure P, Wm: an adsorbed amount in a monomolecular layer, C: a constant relating to a magnitude of interaction between a solid surface and the adsorbate (C =exp{(E1-E2)RT}) [E1: adsorption heat of a first layer (kJ/mol), E2: liquefaction heat at a measurement temperature of the adsorbate (kj/mol)]

$$Stotal = (WmNAcs)M \cdots (2)$$

In Expression (2), N: Avogadro's number, M: a molecular weight, Acs: an adsorption cross-sectional area

$$S = Stotal/W \cdots (3)$$

In Expression (3), w: a sample weight (g)

In a representative example of a resin or a resin composition, the hard carbon described above may be produced as follows.

First, a resin or a resin composition, which is to be subjected to a carbonization treatment, is produced.

A device of preparing the resin composition is not particularly limited. However, for example, in a case of performing melting and mixing, a kneading device such as a kneading roll and a monoaxial or biaxial kneader may be used. In addition, in a case of performing dissolving and mixing, a mixing device such as a Henschel mixer and a disperser may be used. In addition, in a case of performing pulverization and mixing, for example, a device such as a hammer mill and a jet mill may be used.

The resin composition, which can be obtained in the above-described manner, may be a resin composition obtained by only physically mixing a plurality of kinds of components, or a part of the resin composition may be subjected to a chemical reaction by a mechanical energy that is applied at the time of mixing (agitation, kneading, and the like) during preparation of the resin composition and a thermal energy converted from the mechanical energy. Specifically, the resin composition may be subjected to a mechanochemical reaction due to the mechanical energy and a chemical reaction due to the thermal energy.

The hard carbon is obtained by subjecting the resin composition or the resin to a carbonization treatment.

Here, conditions of the carbonization treatment are not particularly limited.

However, for example, the carbonization treatment may be performed by temperature-rising from room temperature at a rate of 1°C/hour to 200°C/hour, and retention at 800°C to 3000°C for 0.1 hours to 50 hours, and preferably 0.5 hours to 10 hours. With regard to an atmosphere during the carbonization treatment, it is preferable to perform the carbonization treatment in an inert atmosphere such as nitrogen and helium gas, a substantially inert atmosphere in which a trace amount of oxygen is present in the inert gas, or a reducing gas atmosphere. According to this configuration, thermal decomposition (oxidation and decomposition) of the resin is suppressed, and thus a desired carbonaceous material may be obtained.

Conditions such as temperature and time during the carbonization treatment may be appropriately adjusted to realize optimal hard carbon characteristics.

In addition, appropriate conditions may be determined according to a resin and the like to obtain a carbonaceous material in which the full width at half maximum of a peak which is measured by the XPS method and is recognized in the vicinity of 285 eV is 0.8 eV to 1.8 eV. However, for example, the temperature during the carbonization treatment may be set to 1000°C or higher or a temperature rising rate may be set to be less than 200°C/hour.

According to the above-described treatment, it is assumed that the surface of the hard carbon is constituted by inactive functional groups and thus it is possible to obtain the hard carbon having a full width at half maximum of a peak, which is measured by the XPS method and is recognized in the vicinity of 285 eV, of 0.8 eV to 1.8 eV.

In addition, a pre-carbonization treatment may be performed before the carbonization treatment.

Here, conditions of the pre-carbonization treatment are not particularly limited. However, for example, the pre-carbonization treatment may be performed at 200°C to 600°C for 1 hour to 10 hours. In this manner, the pre-carbonization treatment is performed before the carbonization treatment to make the resin composition, the resin, and the like infusible.

Accordingly, even when a pulverizing treatment of the resin composition or the resin is performed before the carbonization treatment process, the resin composition, the resin, and the like after being pulverized are prevented from being refused during the carbonization treatment. As a result, a desired carbonaceous material can be effectively obtained.

At this time, as an example of a method of obtaining the hard carbon in which the positron lifetime measured by the positron annihilation method is 370 picoseconds to 480 picoseconds, a method of performing the pre-carbonization treatment in a state in which a reducing gas and an inert gas are not present are exemplary examples.

In addition, in a case of using a thermosetting resin or a polymerizable high molecular compound as a resin for production of the hard carbon, a curing treatment of the resin composition or the resin may be performed before the pre-carbonization treatment.

A curing treatment method is not particularly limited. However, for example, the curing treatment may be performed by a method of thermally curing the resin composition by applying heat to the resin composition in an amount capable of causing a curing reaction, a method of using the resin and a curing agent in combination, and the like. According to this, the pre-carbonization treatment is completed in a substantially solid state, the carbonization treatment or the pre-carbonization treatment can be performed in a state in which a resin structure is maintained to a certain degree, and thus it is possible to control the structure or characteristics of the hard carbon.

In addition, in a case of performing the carbonization treatment or the pre-carbonization treatment, a metal, a pigment, a lubricant, an antistatic agent, an antioxidant, and the like are added to the resin composition to apply desired characteristics to the carbonaceous material.

In a case of performing the above-described curing treatment and/or the pre-carbonization treatment, an object to be treated may be pulverized before the carbonization treatment. In this case, a variation in a thermal history during the carbonization treatment is reduced, and thus homogeneity in a surface state of the hard carbon may be raised. In addition, handling properties of the object to be treated may be made to be satisfactory.

Further, to obtain the hard carbon in which the positron lifetime measured by the positron annihilation method is 370 picoseconds to 480 picoseconds, for example, natural cooling to 800°C to 500°C may be performed in the presence of a reducing gas or an inert gas after the carbonization treatment as necessary, and then may be cooled to 100°C or lower at a rate of 100°C/hour.

According to the configuration described above, cracking in the hard carbon due to rapid cooling is suppressed, and thus voids that are formed may be maintained. According to this reason, it is assumed that the hard carbon in which the positron lifetime measured by the positron annihilation method is 370 picoseconds to 480 picoseconds can be obtained.

The negative electrode active materials 32a and 32b that are constituted by the carbonaceous material are applied to both surfaces of the negative electrode current collector 31, respectively, thereby obtaining the negative electrode plate 3. In addition, the positive electrode active materials 22a and 22b are applied to both surfaces of the positive electrode current collector 21, respectively, thereby obtaining the positive electrode plate 2. In addition, as shown in FIG. 2 to FIG 4, when winding the positive electrode plate 2 and the negative electrode plate 3 and allowing these electrode plates to overlap with each other, the positive electrode active material 22a of the positive electrode plate 2 and the negative electrode active material 32a of the negative electrode plate 3 are made to reliably face each other, and the positive electrode active material 22b of the positive electrode plate 2 and the negative electrode active material 32b of the negative electrode plate 3 are made to reliably face each other. According to this, lithium ions can quickly migrate between the "positive electrode active material" and the "negative electrode active material" with the electrolytic solution 6 interposed therebetween.

In addition, when comparing the thickness $t_2$ of the positive electrode plate 2 and the thickness $t_3$ of the negative electrode plate 3, it is preferable to satisfy a relationship of $t_2 \leq t_3$.

In addition, the plate-shaped separators 4a and 4b having flexibility are interposed between the positive electrode plate 2 and the negative electrode plate 3 that are wound, respectively. Each of the separators 4a and 4b has a function of preventing short-circuit from occurring due to contact between the positive electrode plate 2 and the negative electrode plate 3, a function of preventing an internal pressure or a temperature inside the secondary battery 1 from rapidly rising, a function of preventing the secondary battery 1 from catching fire due to an overcurrent.

The separators 4a and 4b may be constituted by a porous film such as polyethylene and polypropylene, non-woven fabric, and the like.

In the secondary battery 1, an object (hereinafter, referred to as "third roll 13"), in which the positive electrode plate 2, the negative electrode plate 3, and the separators 4a and 4b are made to overlap with each other and are wound in a roll shape, is accommodated in the container 5.

In addition, as shown in FIG. 2, the separators 4a and 4b are present as fourth rolls 14a and 14b, respectively, before being accommodated in the container 5, that is, during production of the secondary battery 1.

The electrolytic solution 6 is filled between the positive electrode plate 2 and the negative electrode plate 3, and is a medium through with lithium ions migrate during charging and discharging.

As the electrolytic solution 6, a solution, which is obtained by dissolving a lithium salt as an electrolyte in a nonaqueous solvent, is used. As the nonaqueous solvent, a mixture of cyclic esters such as propylene carbonate, ethylene carbonate, and γ-butyrolactone, chain esters such as dimethyl carbonate and diethyl carbonate, and chain ester such as dimethoxy ethane, and the like may be used. As the electrolyte, lithium metal salts such as $LiClO_4$ and $LiPF_6$, tetraalkyl ammonium salt, and the like may be used. In addition, the electrolyte may be used as a solid electrolyte by mixing the salts in polyethylene oxide, polyacrylonitrile, and the like.

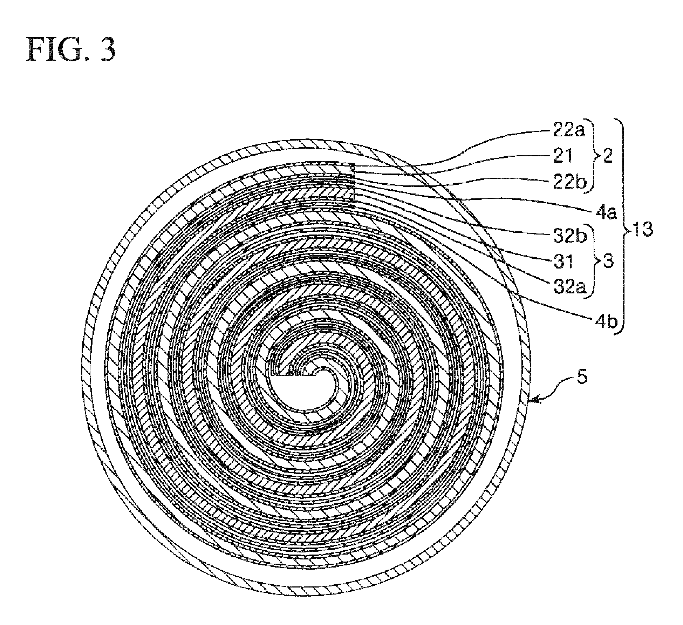

The container 5 that accommodates the third roll 13 is constituted by a member having a bottomed cylindrical shape. In addition, a cross-sectional shape of the container 5 is a circular shape in a configuration shown in FIG. 3 and FIG 4, but there is no limitation thereto. For example, the cross-sectional shape may be a square shape or an elliptical shape.

The lid 7 is mounted on an upper end opening 51 of the container 5 to liquid-tightly seal the upper end opening 51. The lid 7 has a top plate 71 and a wall portion 72 that is formed to protrude toward the lower side from the edge portion of the top plate 71. In addition, the wall portion 72 can be inserted around an edge portion of the upper end opening 51 of the container 5, and for example, the inserted portion may be welded. According to this, the lid 7 may liquid-tightly seal the container 5 in a reliable manner.

In addition, as constituent materials of the container 5 and the lid 7, for example, aluminum is preferably used from the viewpoints that conductivity is relatively high and easiness during molding is also relatively high.

Next, a method of producing the secondary battery 1 having the above-described configuration will be described.

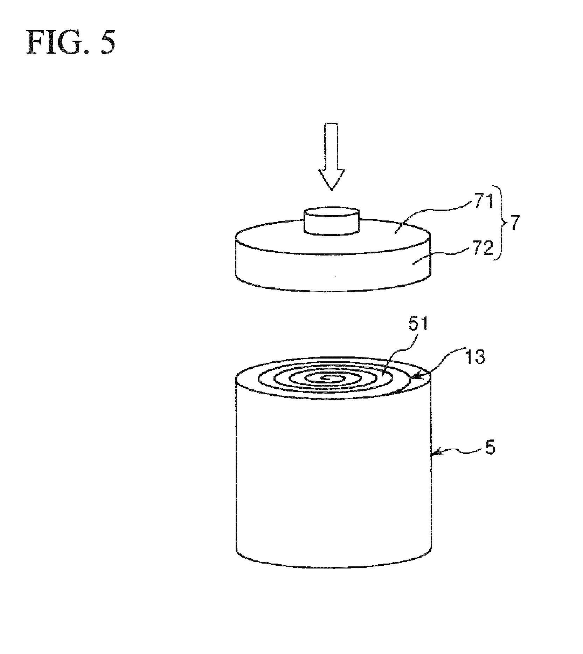

This production method includes an active material providing process (refer to FIG. 1A and FIG. 1B), a first winding process (refer to FIG. 1A and FIG. 1B), a second winding process (refer to FIG. 2), an accommodation process (refer to FIG. 3), a filling process (refer to FIG. 4), and a sealing process (refer to FIG. 5 and FIG 6).

Before describing the respective processes, a device that is used in the production method will be described.

As shown in FIG 1A, in the active material providing process, an ejector 20A that ejects the paste-like positive electrode active materials 22a and 22b toward the positive electrode current collector 21, and a dryer 30A that dries the paste-like positive electrode active materials 22a and 22b that are ejected onto the positive electrode current collector 21 are used. In addition, as shown in FIG. 1B, in the active material providing process, an ejector 20B that ejects the paste-like negative electrode active materials 32a and 32b toward the negative electrode current collector 31, and a dryer 30B that dries the paste-like negative electrode active materials 32a and 32b that are ejected onto the negative electrode current collector 31 are used.

The ejector 20A and the ejector 20B have the same configuration except that the active materials to be ejected are different from each other, and thus a representative description will be made with respect to the ejector 20A. In addition, the dryer 30A and the dryer 30B have the same configuration except that the active materials to be dried are different from each other, and thus a representative description will be made with respect to the dryer 30A.

The ejector 20A includes a pair of nozzles 201a and 201b that are disposed to face each other in a vertical direction.

The nozzle 201a is connected to a tank (not shown) in which the paste-like positive electrode active material 22a is stored through a tube (not shown), and thus the nozzle 201 a is supplied with the paste-like positive electrode active material 22a from the tank, and ejects the paste-like positive electrode active material 22a. Similarly, a nozzle 201b is also connected to a tank (not shown) in which the paste-like positive electrode active material 22b is stored through a tube (not shown), and thus the nozzle 202 is supplied with the paste-like positive electrode active material 22b from the tank, and ejects the paste-like positive electrode active material 22b.

In addition, when the positive electrode current collector 21 passes through the nozzle 201a and the nozzle 201b, the positive electrode active material 22a is ejected from the nozzle 201a and is applied onto one surface of the positive electrode current collector 21, and the positive electrode active material 22b is ejected from the nozzle 201b and is applied onto the other surface of the positive electrode current collector 21.

The dryer 30A includes a chamber 301. The chamber 301 has a configuration in which for example, a heater (not shown) is embedded at the inside to heat an internal space of the chamber 301. In addition, the chamber 301 has an inlet port 302 through which the positive electrode current collector 21 enters, and an outlet port 303 through which the positive electrode current collector 21 that entered the chamber 301 through the inlet port 302 goes out. In addition, the chamber 301 having this configuration can heat and dry the paste-like positive electrode active materials 22a and 22b that are applied onto the positive electrode current collector 21 while the positive electrode current collector 21 enters the chamber 301 through the inlet port 302 and goes out through the outlet port 303. According to this, solid or semi-solid positive electrode active materials 22a and 22b are formed (provided) on the positive electrode current collector 21 in a layer shape.

In addition, the method of applying the paste-like positive electrode active materials 22a and 22b onto the positive electrode current collector 21 is not limited to the method of using the nozzles 201a and 201b, that is, a spray method, and for example, dipping is also possible.

In addition, the method of drying the paste-like positive electrode active materials 22a and 22b is not limited to the heating type method, and for example, a blowing type method is also possible.

As shown in FIG 1A, FIG 1B, and FIG. 2, in the active material providing process, the first winding process, and the second winding process, a winder 40 is used.

As shown in FIG. 1A, the winder 40 includes two shaft members 401A and 402A that are disposed to be spaced away from each other. The positive electrode current collector 21 may be stretched between the shaft member 401A and the shaft member 402A. In addition, the shaft members 401 A and 402A are rotatably supported, respectively. In a configuration shown in FIG. 1A, the shaft member 402A is a drive side and the shaft member 401A is a driven side. In addition, when the shaft member 402A rotates, the positive electrode current collector 21 can be wound around the shaft member 402A in a roll shape (spiral shape) by the shaft member 402A. This wound object becomes the first roll 11.

As shown in FIG. 1B, the winder 40 incudes two shaft members 401 B and 402B that are disposed to be spaced away from each other at positions different that of the shaft members 401 A and 402A. The negative electrode current collector 31 may be stretched between the shaft member 401B and the shaft member 402B. In addition, the shaft members 401B and 402B are rotatably supported, respectively. In a configuration shown in FIG 1B, the shaft member 402B is a drive side, and the shaft member 401 B is a driven side. In addition, when the shaft member 402B rotates, the negative electrode current collector 31 can be wound around the shaft member 402B in a roll shape (spiral shape). This wound object becomes the second roll 12.

As shown in FIG. 2, the winder 40 includes shaft members 403A, 403B, and 404 at positions different from that of the shaft members 401A and 401B. The shaft members 403A, 403B, and 404 are rotatably supported, respectively. In a configuration shown in FIG 2, the shaft member 404 is a drive side, and the shaft members 402A, 402B, 403A, and 403B are driven sides, respectively.

The separator 4a is prepared in advance in a state of being wound around the shaft member 403A in a roll shape as the fourth roll 14a. Similarly, the separator 4b is prepared in advance in a state of being wound around the shaft member 403B in a roll shape as the fourth roll 14b.

In addition, when the shaft member 404 rotates, the positive electrode plate 2 from the first roll 11, the negative electrode plate 3 from the second roll 12, the separator 4a from the fourth roll 14a, and the separator 4b from the fourth roll 14b can be collectively wound around the shaft member 404. The wound object becomes the third roll 13.

In addition, in the winder 40, it is preferable that the spaced distance (inter-shaft distance) between the shaft member 404 and each of the shaft members 402A, 402B, 403A, and 403B be set to be as short as possible. According to this, it is possible to reliably maintain the following curling tendency of the positive electrode plate 2, the negative electrode plate 3, and the separators 4a and 4b. Each spaced distance is not particularly limited, and for example, 50 mm to 10000 mm is preferable, and 100 mm to 5000 mm is more preferable.

In addition, as shown in FIG 2, it is preferable that the positive electrode plate 2, the negative electrode plate 3, and the separators 4a and 4b be linearly stretched without being curved midway until being wound around the shaft member 404.

Next, respective processes will be described.

Active Material Providing Process

[1] As shown in FIG 1A, the positive electrode current collector 21 is stretched between the shaft member 401A and the shaft member 402A. At an initial state, the positive electrode current collector 21 is wound around in advance on a shaft member 401A side. In addition, when the shaft member 402A rotates in a clockwise direction in FIG 1A from this state, the positive electrode current collector 21 is conveyed toward the right side in the drawing.

In addition, at this time, the paste-like positive electrode active material 22a is ejected from the nozzle 201 a of the ejector 20A, and the paste-like positive electrode active material 22b is ejected from the nozzle 201b. According to this, the positive electrode active materials 22a and 22b are supplied to both surfaces of the positive electrode current collector 21, respectively.

The positive electrode active materials 22a and 22b that are supplied to the positive electrode current collector 21 are heated and dried during passing through the inside of the chamber 301 of the dryer 30A in combination with the positive electrode current collector 21. According to this, the positive electrode active material 22a that is solidified is provided to one surface of the positive electrode current collector 21, and the positive electrode active material 22b that is solidified is also provided to the other surface, thereby obtaining the positive electrode plate 2.

As shown in FIG 1B, the negative electrode current collector 31 is stretched between the shaft member 401 B and the shaft member 402B. At an initial state, the negative electrode current collector 31 is wound in advance on a shaft member 401B side. In addition, when the shaft member 402B rotates in a clockwise direction in FIG 1B from this state, the negative electrode current collector 31 is conveyed toward the right side in the drawing.

In addition, at this time, the paste-like negative electrode active material 32a is ejected from the nozzle 201a of the ejector 20B, and the paste-like positive electrode active material 22b is ejected from the nozzle 201b. According to this, the negative electrode active materials 32a and 32b are supplied to both surfaces of the negative electrode current collector 31.

The negative electrode active materials 32a and 32b that are supplied to the negative electrode current collector 31 are heated and dried during passing through the inside of the chamber 301 of the dryer 30B in combination with the negative electrode current collector 31. According to tis, the negative electrode active material 32a that is solidified is provided to one surface of the negative electrode current collector 31, and the negative electrode active material 32b that is solidified is also provided to the other surface, thereby obtaining the negative electrode plate 3.

In addition, the process illustrated in FIG. 1A and the process illustrated in FIG. 1B may be performed in parallel or with a time difference, that is, sequentially.

[2] First Winding Process

As shown in FIG 1A, along with rotation of the shaft member 402A, the positive electrode plate 2 that is obtained in the previous process is wound around the shaft member 402A (clockwise direction) in a roll shape and becomes the first roll 11. In addition, in the first roll 11, the curling tendency is provided to the positive electrode plate 2. Here, the "curling tendency" represents that a curved state is maintained at the positive electrode plate 2 with the same curvature as a curvature corresponding to the number of turns of the first roll 11 in a natural state in which an external force is not applied.

On the other hand, as shown in FIG 1B, along with rotation of the shaft member 402B, the negative electrode plate 3 that is obtained in the previous process is wound around the shaft member 402B (clockwise direction) in a roll shape and becomes the second roll 12. In addition, in the second roll 12, the curling tendency is provided to the negative electrode plate 3. Here, the "curling tendency" represents that a curved state is maintained at the negative electrode plate 3 with the same curvature as a curvature corresponding to the number of turns of the second roll 12 in a natural state in which an external force is not applied.

[3] Second Winding Process

As shown in FIG. 2, the fourth rolls 14a and 14b are prepared in a state of being wound in the same direction as the first roll 11 or the second roll 12, respectively. In the fourth roll 14a, the curling tendency is provided to the separator 4a, and in the fourth roll 14b, the curling tendency is also provided to the separator 4b.

In addition, after the first winding process, an outer side end of the first roll 11 (positive electrode plate 2), an outer side end of the second roll 12 (negative electrode plate 3), an outer side end of the fourth roll 14a (separator 4a), and an outer side end of the fourth roll 14b (separator 4b) are supported against the shaft member 404. At this time, with regard to a displacement sequence (overlapping sequence), the separator 4b, the negative electrode plate 3, the separator 4a, and the positive electrode plate 2 are displaced in this order from an shaft member 404 side toward the outer side (refer to FIG. 2).

In addition, as shown in FIG. 2, when the shaft member 404 rotate in a counter clockwise direction in the drawing, the positive electrode plate 2 is unrolled from the first roll 11 toward the shaft member 404, the negative electrode plate 3 is unrolled from the second roll 12 toward the shaft member 404, the separator 4a is unrolled from the fourth roll 14a toward the shaft member 404, and the separator 4b is unrolled from the fourth roll 14b toward the shaft member 404.

According to this, the positive electrode plate 2 that is unrolled and the negative electrode plate 3 that is unrolled are wound around the shaft member 404 in a roll shape while being allowed to overlap with each other to a degree at which the curling tendency is not lost, that is, in such a manner that the curling-tendency-provided state is maintained. In addition, the separators 4a and 4b that are unrolled are inserted between the positive electrode plate 2 and the negative electrode plate 3, respectively, in a state in which the curling tendency is provided.

When performing the winding, since the curling tendency is provided in advance to the positive electrode plate 2, the negative electrode plate 3, and the separators 4a and 4b in the same direction before the winding, for example, the winding process can be performed quickly and easily in comparison to a case where the curing tendency is not provided or a case where a fold line is formed. According to this, a time consumed in this process may be suppressed.

In addition, since the curling tendency is provided in the same direction, the positive electrode plate 2, the separator 4a, the negative electrode plate 3, and the separator 4b tend to come into close contact with each other during the winding, and thus it is possible to reliably prevent positional deviation between these members, and it is possible to prevent winkling or distortion from occurring.

After the second winding process, the third roll 13, in which the positive electrode plate 2 and the negative electrode plate 3 are disposed to face each other, can be obtained. In the third roll 13, the positive electrode plate 2 is located at the outermost side.

[4] Accommodation Process

As shown in FIG 3, a vacant container 5 in which the electrolytic solution 6 is not filled yet is prepared. The third roll 13 is accommodated in the container 5. At this time, it is preferable that the central axis of the container 5 and the central axis of the third roll 13 coincide with each other.

[5] Filling Process

Next, as shown in FIG 4, the electrolytic solution 6 is filled in the container 5 in which the third roll 13 is accommodated. The electrolytic solution 6 can be filled from an upper end opening 51 of the container 5.

In addition, as described above, in the third roll 13, the positive electrode plate 2, the separator 4a, the negative electrode plate 3, and the separator 4b come into close contact with each other. According to this, the electrolytic solution 6 quickly penetrates a space between these members due to a capillary phenomenon, and thus this contributes to shortening of a filling time of the electrolytic solution 6.

[6] Sealing Process

As shown in FIG 5, the lid 7 is prepared. In addition, as shown in FIG 6, the lid 7 is mounted on the upper end opening 51 of the container 5, thereby liquid-tightly sealing the container 5.

Through the above-described processes, the secondary battery 1 can be obtained.

In addition, a test for determining whether the secondary battery 1 is a non-defective article or a defective article may be performed after the sealing process.

In this manufacturing process, it is preferable that in the first winding process, a winding speed $v_1$ when winding the positive electrode plate 2 to obtain the first roll 11, and a winding speed v2 when winding the negative electrode plate 3 to obtain the second roll 12 be substantially the same as each other.

In addition, it is preferable that the winding speeds $v_1$ and $V_2$, and a winding speed $v_3$ in the second winding process to obtain the third roll 13 be the same as each other or different from each other. In a case where these speeds are different from each other, the winding speed $v_3$ is set to be faster than the winding speeds $v_1$ and $v_2$. Since the curling tendency is provided to the positive electrode plate 2 and the negative electrode plate 3, the winding speed in the second winding process can be set to be fast by the difference. According to this, contribution may be made to shortening of a time of the entire processes.

In addition, in this production method, it is preferable that the processes subsequent to the second winding process, that is, from the second winding process to the sealing process be performed in an inert atmosphere. In these processes, it is preferable to set the dew point temperature to a predetermined value, and thus when performing these processes in the inert atmosphere, it is easy to manage the dew point temperature.

Hereinbefore, the method of producing the lithium ion secondary battery of the invention has been described with reference to the embodiment illustrated in the drawings, but the invention is not limited thereto. In addition, each portion that constitutes the lithium ion secondary battery may be substituted with an arbitrary configuration capable of exhibiting the same function. In addition, an arbitrary configuration may be added.

Industrial Applicability

The invention is applicable to a method of producing a lithium ion secondary battery which is capable of quickly performing winding when winding a positive electrode plate and a negative electrode plate while allowing these electrode plates to overlap with each other, and to which reliable prevention of positional deviation between the positive electrode plate and the negative electrode plate is required.

Reference Signs List

    1: Lithium ion secondary battery (Secondary battery)
    2: Positive electrode plate
    21: Positive electrode current collector
    22a, 22b: Positive electrode active material (Positive electrode material)
    3: Negative electrode plate
    31: Negative electrode current collector
    32a, 32b: Negative electrode active material (Negative electrode material)
    4a, 4b: Separator
    5: Container
    51: Upper end opening

6: Electrolytic solution
7: Lid (Cap)
71: Top plate
72: Wall portion
11: First roll
12: Second roll
13: Third roll
14a, 14b: Fourth roll
20A, 20B: Ejector
201a, 201b: Nozzle
30A, 30B: Dryer
301: Chamber
302: Inlet port
303: Outlet port
40: Winder
401A, 401 B, 402A, 402B, 403A, 403B, 404: Shaft member
A: Inclination
$t_2$, $t_3$: Thickness
$V_1$, $V_2$, $V_3$: Winding speed

**Claims**

1. A method of producing a lithium ion secondary battery including a positive electrode plate provided with a positive electrode current collector which is constituted by a plate-shaped body having flexibility and has conductivity and a positive electrode active material which is formed on at least one surface of the positive electrode current collector in a layer shape, and a negative electrode plate provided with a negative electrode current collector which is constituted by a plate-shaped body having flexibility and has conductivity and a negative electrode active material which is formed on at least one surface of the negative electrode current collector in a layer shape, the positive electrode plate and the negative electrode plate being overlapped to face each other, the method comprising:

   a first winding process of winding the positive electrode plate in a roll shape to form a first roll and to provide a curling tendency to the positive electrode plate, and of winding the negative electrode plate separately from the positive electrode plate in a roll shape in the same direction as a winding direction of the first roll to form a second roll and to provide a curling tendency to the negative electrode plate; and
   a second winding process of unrolling the positive electrode plate from the first roll, unrolling the negative electrode plate from the second roll, and winding the unrolled positive electrode plate and negative electrode plate in a roll shape to form a third roll while allowing the positive electrode plate and the negative electrode plate to overlap with each other and maintaining the curling tendency.

2. The method of producing a lithium ion secondary battery according to claim 1,
   wherein respective winding speeds with respect to the positive electrode plate and the negative electrode plate in the first winding process, and a winding speed in the second winding process are equal to each other.

3. The method of producing a lithium ion secondary battery according to claim 1,
   wherein the respective winding speeds with respect to the positive electrode plate and the negative electrode plate in the first winding process, and the winding speed in the second winding process are different from each other.

4. The method of producing a lithium ion secondary battery according to claim 3,
   wherein the winding speed in the second winding process is faster than the respective winding speeds in the first winding process.

5. The method of producing a lithium ion secondary battery according to any one of claims 1 to 4,
   wherein the second winding process is performed in an inert atmosphere.

6. The method of producing a lithium ion secondary battery according to any one of claims 1 to 5,
   wherein in the second winding process, the winding is performed in such a manner that the positive electrode plate is located on the outermost side of the third roll.

**7.** The method of producing a lithium ion secondary battery according to any one of claims 1 to 6, wherein the lithium ion secondary battery includes a plate-shaped separator having flexibility which is interposed between the positive electrode plate and the negative electrode plate, a fourth roll, which is obtained by winding the separator in a roll shape in the same direction as the winding direction and to which a curling tendency is provided, is prepared, and in the second winding process, when winding the unrolled positive electrode plate and negative electrode plate in a roll shape while allowing the positive electrode and the negative electrode to overlap with each other to obtain the third roll, the winding is performed while unrolling the separator from the fourth roll and interposing the unrolled separator and maintaining the curling tendency between the positive electrode plate and the negative electrode plate that are in the course of winding.

**8.** The method of producing a lithium ion secondary battery according to any one of claims 1 to 7, wherein in the lithium ion secondary battery, the positive electrode active material is respectively provided on both surfaces of the positive electrode current collector, and the negative electrode active material is respectively provided on both surfaces of the negative electrode current collector, and the method further comprises an active material supply process of respectively supplying the positive electrode active material to both surfaces of the positive electrode current collector, and of respectively supplying the negative electrode active material to both surfaces of the negative electrode current collector, prior to the first winding process.

**9.** The method of producing a lithium ion secondary battery according to any one of claims 1 to 8, wherein in the lithium ion secondary battery, the third roll is accommodated in a container filled with an electrolytic solution, and the method further comprises, an accommodation process of accommodating the third roll in the container not yet filled with the electrolytic solution after the second winding process, a filling process of filling the electrolytic solution in the container in which the third roll is accommodated, and a sealing process of liquid-tightly sealing the container.

**10.** The method of producing a lithium ion secondary battery according to any one of claims 1 to 9, wherein the positive electrode active material contains lithium.

**11.** The method of producing a lithium ion secondary battery according to any one of claims 1 to 10, wherein the negative electrode active material contains carbon.

**12.** The method of producing a lithium ion secondary battery according to any one of claims 1 to 11, wherein the positive electrode current collector and the negative electrode current collector are constituted by metal materials different from each other.

FIG. 1A

FIG. 1B

FIG. 2

FIG. 3

FIG. 4

FIG. 5

# FIG. 6

# FIG. 7

## INTERNATIONAL SEARCH REPORT

| International application No. |
| --- |
| PCT/JP2012/074376 |

A. CLASSIFICATION OF SUBJECT MATTER
*H01M10/0587*(2010.01)i, *H01M2/14*(2006.01)i, *H01M4/139*(2010.01)i, *H01M4/66*(2006.01)i, *H01M10/052*(2010.01)i, *H01M10/0566*(2010.01)i

According to International Patent Classification (IPC) or to both national classification and IPC

B. FIELDS SEARCHED

Minimum documentation searched (classification system followed by classification symbols)
H01M10/0587, H01M2/14, H01M4/139, H01M4/66, H01M10/052, H01M10/0566

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2009-289661 A (Katoh Kiko Co., Ltd.),<br>10 December 2009 (10.12.2009),<br>paragraphs [0024] to [0042], [0062], [0063];<br>fig. 1<br>(Family: none) | 1-4,7-12<br>5,6 |
| Y | JP 9-293537 A (Seiko Instruments Inc.),<br>11 November 1997 (11.11.1997),<br>paragraph [0053]<br>(Family: none) | 5 |
| Y | WO 2011/086904 A1 (Panasonic Corp.),<br>21 July 2011 (21.07.2011),<br>paragraphs [0056], [0057]; fig. 7<br>& CN 102318127 A | 6 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>07 December, 2012 (07.12.12) | Date of mailing of the international search report<br>18 December, 2012 (18.12.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/074376

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-294512 A  (Matsushita Electric Industrial Co., Ltd.), 26 October 2006 (26.10.2006), claim 3; paragraphs [0027] to [0032], [0038] to [0044]; example 16; fig. 2 & US 2006/0234115 A1    & US 2010/0040940 A1 & CN 1848483 A | 1-12 |
| A | JP 2008-47307 A  (Mitsui Mining & Smelting Co., Ltd.), 28 February 2008 (28.02.2008), entire text (Family: none) | 1-12 |
| A | JP 8-171917 A  (Sony Corp.), 02 July 1996 (02.07.1996), entire text & US 5658683 A | 1-12 |

Form PCT/ISA/210 (continuation of second sheet) (July 2009)

**EP 2 763 232 A1**

**Patent documents cited in the description**

- JP 2011213136 A

- JP 2011129528 A